# EUROPÄISCHE PATENTANMELDUNG

(11) **EP 1 612 663 A1**
(43) Veröffentlichungstag der Anmeldung: **04.01.2006**
(21) Anmeldenummer: 04015515.2
(22) Anmeldetag: 01.07.2004
(51) Int. Cl.: G06F 9/445

(54) **Verfahren und Gerät zum Ändern der Betriebszustände**

(71) Anmelder: SIEMENS AKTIENGESELLSCHAFT, 80333 München (DE)
(72) Erfinder: Pätzold, Jens, 81827 München (DE)

(57) **Zusammenfassung**

Erläutert wird unter anderem ein Verfahren zum Ändern der Betriebszustände eines Gerätes (10) mit mindestens einem Prozessor (16, 18), bei dem erste Abhängigkeitsdaten (AD, I)und zweite Abhängigkeitsdaten (AD, II) gespeichert werden. Die Abhängigkeitsdaten (AD, I; AD, II) ermöglichen einen anwendungsbezogenen Hochlauf des Gerätes (10), wobei eine Auswahl getroffen werden kann, ohne dass sich das Gerät in einem Einzustand befinden muss, in dem ein Betriebssystemkern (BS2) in der Speichereinheit (20) geladen ist.

## Beschreibung

Die Erfindung betrifft unter anderem eine Verfahren zum Ändern der Betriebszustände eines Gerätes. So lässt sich ein Auszustand, ein Ruhezustand (Standby) und ein Einzustand eines Gerätes unterscheiden, bei denen der Stromverbrauch in der genannten Reihenfolge steigt und die Verfügbarkeit von Komponenten in der genannten Reihenfolge ebenfalls steigt.

Es ist Aufgabe der Erfindung, ein einfaches Verfahren zum Ändern der Betriebszustände eines Gerätes anzugeben, das insbesondere eine schnelle Verfügbarkeit benötigter Komponenten bei gleichzeitig stromsparender Betriebsweise des Gerätes ermöglicht. Außerdem soll ein zugehöriges Gerät angegeben werden.

Im Einzustand muss insbesondere das Betriebssystem des Gerätes verfügbar sein. Sind mehrere Prozessoren im Gerät vorhanden, so muss bspw. für jeden Prozessor ein Betriebssystem verfügbar sein. Das Betriebssystem dient als Bindeglied zwischen Anwendungsprogrammen und elektronischen Bauelementen des Geräts und übernimmt zentrale Aufgaben, wie die Speicherverwaltung, die Prozessverwaltung bzw. die Steuerung von Ein-und Ausgabeeinheiten. Dagegen erfüllen Anwendungsprogramme spezielle Aufgaben, z.B. das Verwalten eines Telefonbuches. Die Anwendungsprogramm greifen bei der Lösung der speziellen Aufgaben jedoch auch Funktionen des Betriebssystems zu.

Die auf das Verfahren gerichtete Aufgabe wird durch die im Patentanspruch 1 angegebenen Verfahrensschritte gelöst. Weiterbildungen sind in den Unteransprüchen angegeben.

Die Erfindung geht von der Überlegung aus, dass ein kompletter Bootvorgang eine relativ lange Zeit benötigt, da das gesamte System initialisiert werden muss. Da der Nutzer bspw. mit seinem Telefon zu einem bestimmten Zeitpunkt nur eine bestimmte Aktion durchführen möchte, andere Funktionalitäten zu diesem Zeitpunkt aber noch nicht benötigt werden, ist es nicht notwendig, alle Komponenten im System sofort zu initialisieren, d.h. vor dem Ermöglichen der bestimmten Aktion. Durch die Priorisierung der zunächst benötigten Komponenten ist es möglich, die Zeit bis zur Benutzbarkeit der aktuell benötigten Funktionalität erheblich zu verkürzen, insbesondere unter gleichzeitigem geringen Gesamtstromverbrauch des Gerätes.

Jedoch tritt das Problem auf, dass die benötigte Komponente erst feststeht, wenn wieder in den Einzustand geschaltet werden soll. Durch das Verwenden von Abhängigkeitsdaten kann dieses Problem jedoch gelöst werden, wenn die folgenden Verfahrensschritte unabhängig von der Reihenfolge der Auflistung durchgeführt werden:
- Speichern von ersten Abhängigkeitsdaten, welche mindestens eine Befehlsfolge angeben, die in einer Speichereinheit zu speichern ist,
- Speichern von zweiten Abhängigkeitsdaten, welche mindestens eine Befehlsfolge angeben, die in einer Speichereinheit zu speichern ist,
- Betreiben eines Gerätes mit mindestens einem Prozessor in einem Einzustand, in welchem ein Betriebssystemkern in einer Speichereinheit gespeichert ist. Vorzugsweise geben die ersten Abhängigkeitsdaten und die zweiten Abhängigkeitsdaten Programme bzw. Befehlsfolgen des Betriebssystems an, zu dem der Betriebssystemkern gehört jedoch nicht des Betriebssystemkerns selbst. Zu dem Betriebssystemkerngehören insbesondere Programm, ohne die kein Anwendungsprogramm ausgeführt werden kann, insbesondere eine Speicherverwaltung und/oder eine Prozessverwaltung.
- Umschalten des Gerätes aus dem Einzustand in einen Ruhezustand, in dem kein Betriebssystemkern in der Speichereinheit gespeichert ist,
- nach dem Umschalten in den Ruhezustand und vor dem Erreichen des nächstfolgenden Einzustands Auswählen der ersten Abhängigkeitsdaten oder der zweiten Abhängigkeitsdaten, d.h. insbesondere vor oder auch während des Ladens des Betriebssystemkerns,
- Umschalten aus dem Ruhezustand in einen dem Ruhezustand unmittelbar folgenden Einzustand,
- beim Umschalten in den Einzustand Speichern des Betriebssystemkerns in einer Speichereinheit des Gerätes und Speichern von Befehlsfolgen in einer Speichereinheit des Gerätes gemäß den ausgewählten Abhängigkeitsdaten.

Damit besteht die Lösung in der Definition von Zielzuständen für einen Bootvorgang und damit Verbunden im Erstellen der Abhängigkeitsdaten. Für die Gesprächsannahme in einem Smartphone kann es zum Beispiel notwendig sein, die Treiber für das GSM-Modul und die Sprachapplikation zu starten, während andere Komponenten im System für das Gespräch nicht benötigt werden, z.B. ein GUI-Programm (Graphical User Interface) für eine Telefonbuchanwendung. Das Ziel besteht nun darin, den Bootvorgang dadurch zu beschleunigen, dass die für das Gespräch benötigten Komponenten gemäß der ausgewählten Abhängigkeitsdaten mit Priorität initialisiert werden, um das Gespräch möglichst frühzeitig zu ermöglichen. Die für das Gespräch nicht benötigten Komponenten können im Anschluss initialisiert werden, um am Ende des Bootvorgangs ein voll funktionsfähiges Betriebssystem zu erhalten. Damit wird dann auch die Verwendung der anderen Funktionalitäten des Mobiltelefons ermöglicht. Durch diese Vorgehensweise können mehr Komponenten als bisher im Gerät heruntergefahren werden, wodurch der Stromverbrauch erheblich verringert wird, während die Zeit bis zur Verfügbarkeit der Komponenten im Vergleich zu einem Standbybetrieb dieser Komponenten nur in einem hinnehmbaren Maße steigt.

Bei einer Weiterbildung geben die ersten Abhängigkeitsdaten eine erste Reihenfolge für mindestens zwei voneinander verschiedene Befehlsfolgen an, die in einer Speichereinheit zu speichern sind. Die zweiten Abhängigkeitsdaten geben eine zweite Reihenfolge für mindestens zwei voneinander verschiedene Befehlsfolgen an, die in einer Speichereinheit zu speichern sind, insbesondere in derselben Speichereinheit wie die ersten Abhängigkeitsdaten. Eine erste Befehlsfolge, die sowohl in der ersten Reihenfolge als auch in der zweiten Reihenfolge angegeben ist, hat in der ersten Reihenfolge eine Position, die kleiner ist als die Position einer zweiten Befehlsfolge, die ebenfalls sowohl in den ersten Reihenfolge als auch in den zweiten Reihenfolge angegeben ist. Die erste Befehlsfolge hat in der zweiten Reihenfolge eine Position, die größer als die Position der zweiten Befehlsfolge in der zweiten Reihenfolge ist. Somit sind die Abfolgen der beiden Befehlsfolgen in den Reihenfolgen vertauscht. Durch das Vertauschen ergibt sich hinsichtlich einer bestimmten Anwendung ein Zeitgewinn beim Start, wobei am Ende des Startvorgangs aber unabhängig von den ausgewählten Abhängigkeitsdaten bei einer Ausgestaltung alle Komponenten verfügbar sind.

Bei einer nächsten Weiterbildung geben die ersten Abhängigkeitsdaten ohne Bezug zu einer Programmbefehlsfolge mindestens eine Hilfsbefehlsfolge an, die in einer Speichereinheit zu speichern ist, bspw. für einen Kompletthochlauf. Die zweiten Abhängigkeitsdaten geben für eine Programmbefehlsfolge mindestens eine nicht zu der Programmbefehlsfolge gehörende Hilfsbefehlsfolge an, die zur Ausführung der Programmbefehlsfolge in einer Speichereinheit des Gerätes zu speichern ist. Bspw. ist die Hilfsbefehlsfolge eine sogenannte Middleware, die als Schnittstelle zwischen der Programmbefehlsfolge bzw. dem Anwendungsprogramm und dem Betriebssystemkern dient

Alternativ geben auch die ersten Abhängigkeitsdaten für die erste Programmbefehlsfolge mindestens eine nicht zu der ersten Programmbefehlsfolge gehörende Hilfsbefehlsfolge an, die zur Ausführung der ersten Programmbefehlsfolge in einer Speichereinheit des Gerätes zu speichern ist. Damit kann beim Hochlaufen zwischen verschiedenen Programmbefehlsfolgen bzw. Anwendungsprogrammen gewählt werden. Insbesondere werden auch die Programmbefehlsfolgen bzw. die Anwendungsprogramm in den Abhängigkeitsdaten angegeben.

Bei Auswahl von Abhängigkeitsdaten für eine Programmbefehlsfolge wird nach dem Speichern der Programmbefehlsfolge in einer Speichereinheit des Gerätes gemäß den Abhängigkeitsdaten mindestens eine weitere Befehlsfolge gespeichert, die nicht zur Ausführung der Programmbefehlsfolge erforderlich ist. Bei einer Ausgestaltung ist die weitere Befehlsfolge ein Teil eines Betriebssystems. Somit kann trotz der frühen Verfügbarkeit der Anwendungs- bzw. Programmbefehlsfolge ein Kompletthochlauf durchgeführt werden oder es werden weitere Komponenten zur Verfügung gestellt, die dem Nutzer später einen schnellen Wechsel zu einer anderen Anwendung ermöglichen, insbesondere werden auch andere Anwendungen geladen.

Bei einer Weiterbildung wird nach dem Speichern der Programmbefehlsfolge in einer Speichereinheit des Gerätes mit der Ausführung der Programmbefehlsfolge automatisch begonnen, so dass der Nutzer über die Auswahl der Abhängigkeitsdaten hinaus keine weitere Eingaben bis zur vollen Verfügbarkeit der Programmbefehlsfolge eingeben muss.

Die Programmbefehlsfolge ist bei Weiterbildungen ein Anwendungsprogramm, insbesondere ein Kalenderprogramm, ein Notizprogramm, ein Adressverwaltungsprogramm, ein E-Mailprogramm, ein Schreibprogramm, ein Tabellenkalkulationsprogramm, ein Datenbankprogramm oder ein Browserprogramm.

Bei einer anderen Weiterbildung ist das Gerät ein Mobilfunktelefon. Insbesondere bei sogenannten Smartphones sollen eine Vielzahl von Anwendungen möglichst ständig und möglichst schnell bei einer langen Betriebsdauer im Standbymodus verfügbar sein. Trotz der begrenzten Akkubetriebszeit kann dies auf Grund des Einsatzes des erfindungsgemäßen Verfahrens oder einer seiner Weiterbildungen auf einfache Art erreicht werden.

Bei einem Mobilfunktelefon ist gemäß einer Weiterbildung die eine Programmbefehlsfolge ein Telefonbuchprogramm und die andere Programmbefehlsfolge ist ein Telefonieprogramm. Enthält das Mobilfunktelefon mindestens zwei Prozessoren, z.B. einen Modemprozessor und einen Anwendungsprozessor, so führt das Verfahren zu einer verbesserten Betriebsweise, insbesondere wenn im Ruhezustand nur einer der beiden Prozessoren eingeschaltet ist, vorzugsweise der Modemprozessor, und der andere Prozessor ausgeschaltet ist, vorzugsweise der Anwendungsprozessor. Der Modemprozessor sollte auch im Ruhezustand verfügbar sein, um eingehende Anrufe empfangen zu können.

Alternativ ist das Gerät eine Datenverarbeitungsanlage, insbesondere ohne Mobilfunknetzschnittstelle. Auch bei Computern, die an einem Stromnetz betrieben werden, lassen sich lange Hochlaufzeiten erst durch den Einsatz des erfindungsgemäßen Verfahrens vermeiden. Wie sich in der Vergangenheit gezeigt hat, sind nämlich höhere Taktfrequenzen und mehr Speicherplatz keine hinreichende Bedingung für eine Verkürzung der Hochlaufzeiten.

Bei einer Weiterbildung sind die ersten Abhängigkeitsdaten und die zweiten Abhängigkeitsdaten Teile eines Abhängigkeitsgraphen, der Knoten und Kanten zwischen den Knoten enthält, vorzugsweise Teile eines gerichteten Graphen. Ein Abhängigkeitsgraph ermöglicht eine übersichtliche Eingabe und Speicherung der Abhängigkeitsdaten in komprimierter Form. Bei einer alternativen Weiterbildung enthalten die Abhängigkeitsdaten Abhängigkeitsregeln, die die Reihenfolge festlegen, bspw. in Form einer Aufzählung von Befehlsfolgennamen oder Adressen von Speicherzellen an denen die Befehlsfolgen gespeichert sind.

Bei einer Weiterbildung werden die ersten Abhängigkeitsdaten oder die zweiten Abhängigkeitsdaten vor dem Beginn des Ladens des Betriebssystemkerns ausgewählt, bspw. durch einmaliges Drücken einer Taste, der ein Anwendungsprogramm zugeordnet ist und die das Verlassen des Ruhezustands bewirkt. Alternativ werden die Abhängigkeitsdaten nach dem Beginn des Ladens des Betriebssystemkerns aber noch vor dem Ende des Ladens des Betriebssystemkerns ausgewählt, so dass der Benutzer das Laden des Betriebssystemkerns veranlassen kann, erst danach die Auswahl trifft und dennoch nur eine kurze Zeit bis zur Verfügbarkeit des ausgewählten Anwendungsprogramms warten muss, weil nach dem Laden des Betriebssystemkerns gleich mit dem spezifischen Hochlauf für das ausgewählte Anwendungsprogramm begonnen wird.

Die Erfindung betrifft außerdem ein Gerät, das sich zur Durchführung des erfindungsgemäßen Verfahrens oder einer seiner Weiterbildungen eignet. Damit gelten die oben genannten technischen Wirkungen auch für das Gerät, insbesondere für eine Handy oder für eine Datenverarbeitungsanlage mit Festplatte.

Im Folgenden werden Ausführungsbeispiele der Erfindung an Hand der beiliegenden Zeichnungen erläutert. Darin zeigen:
- Figur 1: Baugruppen eines Mobilfunktelefons, und
- Figur 2: einen Abhängigkeitsgraphen für das Laden von Softwarekomponenten beim Umschalten von einem Ruhezustand in einen Einzustand des Mobilfunkgerätes.

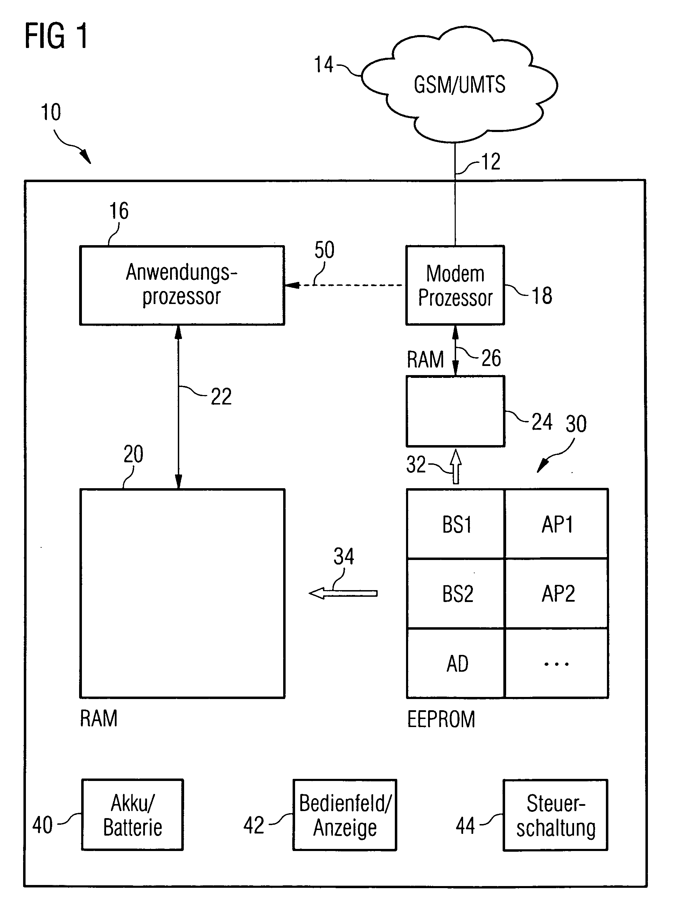

Figur 1 zeigt ein Handy bzw. ein Mobilfunktelefon 10, das über eine Funkschnittstelle 12 an einem Mobilfunknetz 14 betrieben wird, z.B. an einem Mobilfunknetz 14, das gemäß GSM-Standart (Global System Mobile), gemäß UMTS-Standart (Universal Mobile Telecommunication System), gemäß IS-95 oder gemäß einem anderen Standard arbeitet.

Das Mobilfunktelefon 10 enthält einen Anwendungsprozessor 16 und einen Modemprozessor 18. Der Anwendungsprozessor 16 arbeitet Befehle ab, die in einer Speichereinheit 20 gespeichert sind, siehe Pfeil 22. Die Speichereinheit 20 ist z.B. ein RAM (Random Access Memory). Beim Ausführen der in der Speichereinheit 20 gespeicherten Befehle erbringt der Anwendungsprozessor 16 bspw. Funktionen einer Telefonbuchanwendung, einer E-Mailanwendung, einer SMS-Anwendung (Short Message Service), einer MMS-Anwendung (Mulimedia Message Service) usw. Die Speichereinheit 20 verliert die in ihr gespeicherten Daten, wenn das Mobilfunktelefon 10 ausgeschaltet wird oder in einen Ruhezustand (Standby) geschaltet wird. Auch der Anwendungsprozessor 16 wird im Ruhezustand und erst recht im Auszustand spannungslos geschaltet.

Der Modemprozessor 18 arbeitet Befehle ab, die in einer Speichereinheit 24 gespeichert sind, siehe Pfeil 26. Die Speichereinheit 24 ist z.B. ein RAM, der weniger Speicherkapazität als die Speichereinheit 20 hat, bspw. weniger als 1/4 der Speicherkapazität. Beim Ausführen der in der Speichereinheit 24 gespeicherten Befehle erbringt der Modemprozessor 18 Funktionen, durch die ein Tonsignal gemäß zu übertragener Daten moduliert wird. Das modulierte Tonsignal wird dann über die Funkschnittstelle 12 gesendet. Andererseits demoduliert der Modemprozessor ein über die Funkschnittstelle 12 empfangenes Signal, um die im modulierten Signal enthaltenen Daten zurückzugewinnen. Obwohl die Speichereinheit 24 eine sogenannte flüchtig Daten speichernde Speichereinheit ist, wird die Speichereinheit im Ruhezustand mit Spannung versorgt, so dass ihre Daten erhalten bleiben. Auch der Modemprozessor 18 wird im Ruhezustand mit einer Spannung versorgt. Im Auszustand des Mobilfunktelefons 10 gehen dagegen auch die in der Speichereinheit 24 gespeicherten Daten verloren und der Modemprozessor 18 ist ausgeschaltet.

Das Mobilfunktelefon 10 enthält außerdem eine nichtflüchtig speichernde Speichereinheit 30, z.B. einen EEPROM (Electrical Eraseable Programmable Read Only Memory), die auch nach dem Abschalten einer Versorgungsspannung der Speichereinheit 30 Daten speichert. In der Speichereinheit 30 sind gespeichert:
- ein Betriebssystem BS1 für den Modemprozessor, bspw. ein proprietäres Betriebssystem,
- ein Betriebssystem BS2 für den Anwendungsprozessor, beispielsweise das Betriebssystem Symbian oder eine proprietäres Betriebssystem, das sich vom Betriebssystem BS1 unterscheidet,
- Anwendungsprogramme AP1, AP2 usw., und
- Abhängigkeitsdaten AD.

Weiterhin enthält das Mobilfunktelefon 10 einen Akku bzw. eine Batterie zur Strom- und Spannungsversorgung. Ein Bedien-und Anzeigefeld 42 enthält bspw. 12 Tasten zur Eingabe von Telefonnummern und zur Auswahl von Menüpunkten sowie eine LCD-Anzeige (Liquid Cristal Display) zur Anzeige von Menüs und von Statusinformationen. Eine Steuerschaltung 44 dient zum Einschalten des Mobilfunktelefons 10 bzw. zum Umschalten des Mobilfunktelefons 10 aus dem Einzustand in einen Ruhezustand bzw. aus dem Ruhezustand in den Einzustand.

Beim Einschalten des Mobilfunktelefons 10 zu einem Zeitpunkt t0 wird das Betriebssystem BS1 in die Speichereinheit 24 geladen, siehe Pfeil 32. Es wird in einem Initialisierungsvorgang zusätzlicher Arbeitsspeicher in der Speichereinheit 24 für die Ausführung des Betriebssystem BS1 zur Verfügung gestellt. Außerdem werden Datenstrukturen erzeugt, die zur Ausführung des Betriebssystems BS1 erforderlich sind. Nach dem Laden und Initialisieren des Betriebssystems BS1 wird eine Modemanwendung in die Speichereinheit geladen, z.B. das Anwendungsprogramm AP1 und ggf. noch weitere Hilfsprogramme. Danach wird das Anwendungsprogramm AP1 initialisiert und gestartet.

Gleichzeitig oder anschließend wird das Betriebssystem BS2 in die Speichereinheit 20 geladen, siehe Pfeil 34. In einem Initialisierungsvorgang für das Betriebssystem BS2 wird zusätzlicher Arbeitsspeicher in der Speichereinheit 20 für die Ausführung des Betriebssystems BS2 reserviert. Weiterhin werden Datenstrukturen angelegt, die zur Ausführung des Betriebssystems BS2 erforderlich sind, bspw. eine Prozessverwaltungstabelle. Nach dem Starten des Betriebssystems BS2 wird in die Speichereinheit 20 ein Anwendungsprogramm geladen und initialisiert, bspw. das Anwendungsprogramm AP2, das ggf. weitere Hilfsprogramme für seine Ausführung benötigt. Alternativ werden mehrere Anwendungsprogramm automatisch in die Speichereinheit 20 geladen. Die in der Speichereinheit 20 geladenen Anwendungsprogramme AP2 usw. werden bspw. manuell durch die Auswahl eines Benutzers des Mobilfunktelefons 10 gestartet.

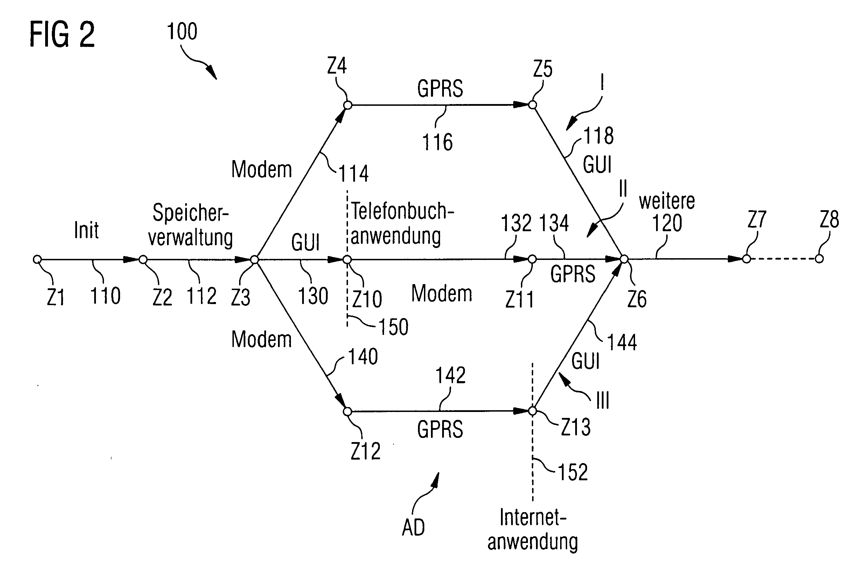

Es wird angenommen, dass der Benutzer des Mobilfunktelefons 10 zu einem Zeitpunkt t2, der nach dem Zeitpunkt t0 liegt, das Mobilfunktelefon 10 in den Ruhezustand schaltet. Der Ruhezustand dauert bspw. mehrere Minuten oder mehrere Stunden. Zu einem Zeitpunkt t4, der nach dem Zeitpunkt t2 liegt, wird bspw. auf Grund einer Eingabe des Benutzers oder auf Grund eines Anreizes 50, der vom Modemprozessor 18 kommt, wieder in den Einzustand geschaltet. Die dabei durchgeführten Verfahrensschritte betreffen nur das Betriebssystem BS2 und werden im Folgenden an Hand der Figur 2 näher erläutert. Dagegen bleibt das Betriebssystem BS1 auch während des Ruhezustandes in der Speichereinheit 24 geladen, d.h. gespeichert und initialisiert.

Figur 2 zeigt einen Abhängigkeitsgraphen 100 für das Laden von Softwarekomponenten beim Umschalten aus dem Ruhezustand in den Einzustand des Mobilfunktelefons 10. Der Abhängigkeitsgraph enthält Knoten, die Betriebszuständen Z1 bis Z13 des Mobilfunktelefons 10 zugeordnet sind. Sogenannte Kanten 110 bis 144 liegen zwischen den Knoten und sind mit Ladevorgängen verbunden, die im Folgenden näher erläutert werden. Der Abhängigkeitsgraph 100 ist in den Abhängigkeitsdaten AD hinterlegt und betrifft Ladevorgänge für die Speichereinheit 20, d.h. für den Anwendungsprozessor 16. Bei einem alternativen Ausführungsbeispiel sind dagegen die Betriebszustände Z1 bis Z13 den Kanten des Abhängigkeitsgraphen 100 und die Verfahrensschritte den Knoten zugeordnet.

In einem Betriebszustand Z1 sind im Ruhezustand keine Daten in der Speichereinheit 20 gespeichert. Zwischen dem Betriebszustand Z1 und einem folgenden Betriebszustand Z2 liegt die Kante 110, mit deren Durchlaufen ein Laden eines ersten Teils des Betriebssystemkerns des Betriebssystems BS2 in die Speichereinheit 20 und ein Initialisieren des Betriebssystemkerns verbunden sind. Bspw. wird ein Urlader ausgeführt, der ein Ladeprogramm aus der Speichereinheit 30 in die Speichereinheit 20 lädt. Anschließend lädt das Ladeprogramm weitere Teile des Betriebssystems BS2 aus der Speichereinheit 30 in die Speichereinheit 20.

Zwischen dem Betriebszustand Z2 und einem folgenden Betriebszustand Z3 liegt die Kante 112, die bspw. mit dem Laden und Initialisieren eines Speicherverwaltungsprogramms und eines Prozessverwaltungsprogramms des Betriebssystems BS2 verbunden ist. Die mit den Kanten 110 und 112 verbundenen Verfahrensschritte laden den Betriebssystemkern des Betriebssystems BS2, d.h. Softwarekomponenten, ohne die kein Anwendungsprogramm ausgeführt werden kann.

Im Betriebszustand Z3 verzweigt der Abhängigkeitsgraph 100 in einen oberen Weg I, der einem Kompletthochlauf zugeordnet ist, in einen mittleren Weg II, der einem Telefonbuchprogramm zugeordnet ist, und in einen unteren Weg III, der mit einem Internetprogramm verbunden ist, z.B. mit einem WAP-Browser (Wireless Application Protocol) oder einem eMail-Progamm. Gemäß Weg I folgt dem Betriebszustand Z3 über die Kante 114 der Betriebszustand Z4. Das Durchlaufen der Kante 114 ist mit dem Laden und Initialisieren einer Modemkomponente des Betriebssystems BS2 verbunden. Die Modemkomponente des Betriebssystems BS2 ermöglicht die Nutzung des Modemprozessors 18 durch den Anwendungsprozessor 16 bzw. durch bestimmte Anwendungsprogramme, die in der Speichereinheit 20 gespeichert werden. Insbesondere enthält die Modemkomponente Treiberprogramme für die Ansteuerung des Modemprozessors 18.

Dem Betriebszustand Z4 folgt auf dem Weg I über die Kante 116 der Betriebszustand Z5. Das Durchlaufen der Kante 116 ist mit dem Laden und Initialisieren einer GPRS-Komponente (General Packet Radio Service) des Betriebssystems BS2 verbunden. Mit Hilfe der GPRS-Komponente können Datenpaket über das Mobilfunknetz 14 gesendet oder Daten aus dem Mobilfunknetz 14 empfangen werden, z.B. Programmdaten oder Bilddaten oder Musikdaten.

Dem Betriebszustand Z5 folgt auf dem Weg I über die Kante 118 der Betriebszustand Z6. Das Durchlaufen der Kante 118 ist mit dem Laden und Initialisieren einer GUI-Komponente (Graphical User Interface) des Betriebssystems BS2 verbunden. Die GUI-Komponente ermöglicht eine benutzerfreundliche Ansteuerung des Anzeigefeldes 42, bspw. unter Verwendung einer grafischen Benutzeroberfläche.

Im Betriebszustand Z6 vereinen sich die drei Wege I, II und III wieder. Dem Betriebszustand Z6 folgt über eine Kante 120 ein Betriebszustand Z7. Mit dem Durchlaufen der Kante 120 ist das Laden und Initialisieren einer weiteren Komponente verbunden, die zu dem Betriebssystem BS2 gehört aber nicht für die Ausführung jedes Anwendungsprogramms erforderlich ist. Optional folgen dem Betriebszustand Z7 weitere Betriebszustände Z8. Bei einem anderen Ausführungsbeispiel ist der automatische Ladevorgang bereits im Betriebszustand Z6 beendet.

Gemäß Weg II folgt dem Betriebszustand Z3 über eine Kante 130 ein Betriebszustand Z10. Das Durchlaufen der Kante 130 ist mit dem Laden der GUI-Komponente des Betriebssystems BS2 verbunden. Das Durchlaufen der Kante 110 ist außerdem mit dem automatischen Laden, Initialisieren und Starten eines Telefonbuchprogramms verbunden, das die GUI-Komponente nutzt. Durch das im Vergleich zum Weg I vorgezogene Laden der GUI-Komponente kann dem Benutzer die Telefonbuchfunktion erheblich eher zur Verfügung gestellt werden als beim Durchlaufen des Weges I. Insbesondere vor dem Initialisieren der Modemanwendung, die eine Anmeldung am Mobilfunknetz erfordert, die bspw. allein schon mehr als 20 Sekunden dauert.

Dem Betriebszustand Z10 folgt gemäß Weg II über eine Kante 132 der Betriebszustand Z11. Das Durchlaufen der Kante 132 ist mit dem Laden und Initialisieren der Modemkomponente verbunden. Dem Betriebszustand Z11 folgt gemäß Weg II über eine Kante 134 der Betriebszustand Z6. Das Durchlaufen der Kante 134 ist mit dem Laden und Initialisieren der GPRS-Komponente verbunden. Gemäß Weg II werden dann die weiteren Betriebszustände Z6 bis Z8 durchlaufen, so dass auch beim Weg II ein Kompletthochlauf des Betriebssystems BS2 durchgeführt wird.

Gemäß Weg III folgt dem Betriebszustand Z2 über eine Kante 140 der Betriebszustand Z12. Das Durchlaufen der Kante 140 ist mit dem Laden und Initialisieren der Modemkomponente des Betriebssystems BS2 verbunden. Dem Betriebszustand Z12 folgt gemäß Weg III beim Durchlaufen einer Kante 142 der Betriebszustand Z13. Das Durchlaufen der Kante 142 ist mit dem Laden und Initialisieren der GPRS-Komponente sowie mit dem automatischen Laden und Initialisieren eines Internetanwendungsprogramms verbunden. Das Internetanwendungsprogramm braucht demzufolge vom Benutzer nicht noch einmal explizit gestartet werden. Außerdem kann der Benutzer das Internetanwendungsprogramm eher nutzen, weil nicht der Kompletthochlauf des Betriebssystems BS2 abgewartet wird. Erst nach dem Starten des Internetanwendungsprogramms wird der weitere Hochlauf des Betriebssystems BS2 fortgesetzt. So folgt gemäß Weg III dem Betriebszustand Z13 über die Kante 144 der Betriebszustand Z6. Mit dem Durchlaufen der Kante 114 wird die GUI-Komponente geladen und initialisiert. Anschließend wird auch beim Weg III der den Wegen I bis III gemeinsame Rest des Abhängigkeitsgraphen 100 durchlaufen, d.h. die dem Betriebszustand Z6 folgenden Betriebszustände.

Es wird angenommen, dass der Benutzer zu dem Zeitpunkt t4 aus dem Ruhezustand in den Einzustand durch das Betätigen einer allgemeinen Umschalttaste am Bedienfeld 42 wechseln möchte. Die allgemeine Umschalttaste ist keinem Anwendungsprogramm zugeordnet, so dass die Steuerschaltung 44 die Auswahl der durch den Weg I festgelegten Teilmenge der Abhängigkeitsdaten AD veranlasst.

Alternativ schaltet der Benutzer zu einem Zeitpunkt t4a, der nach dem Zeitpunkt t2 liegt, aus dem Ruhezustand in den Einzustand durch das Betätigen einer Telefonbuchtaste am Bedienfeld 42. Die Steuerschaltung 44 erfasst das Betätigen der Telefonbuchtaste und veranlasst das die durch den Weg II vorgegebene Teilmenge der Abhängigkeitsdaten AD für den Umschaltvorgang verwendet wird.

Bei einer anderen Alternative schaltet der Modemprozessor 18 zu einem Zeitpunkt t4b, der nach dem Zeitpunkt t2 liegt, aus dem Ruhezustand in den Einzustand, siehe Anreiz 50, weil er bspw. seinerseits einen entsprechenden Anreiz über die Funkschnittstelle 12 empfängt. In diesem Fall veranlasst die Steuerschaltung 44, dass der Weg III des Graphen 100 durchlaufen wird.

Bei einem anderen Ausführungsbeispiel ist der Weg II mit dem Laden, Initialisieren und dem automatischen Ausführen des Telefonbuchprogramms beendet, siehe gestrichelte Linie 150. Verfahrensschritte zum Laden der Modemkomponente oder der GPRS-Komponente werden nicht gemäß den Abhängigkeitsdaten AD durchführt sondern auf Grund von anderen Daten oder Vorgängen. Ebenso ist der Weg III mit dem Laden, Initialisieren und Starten des Internetanwendungsprogramms beendet, siehe gestrichelte Linie 152. Damit werden gemäß der Wege II und III bei diesem Ausführungsbeispiel nur Teilhochläufe des Betriebssystems BS2 durchgeführt. Nur gemäß Weg I wird ein Kompletthochlauf des Betriebssystems BS2 realisiert.

Bei einem anderen Ausführungsbeispiel werden an Stelle der Abhängigkeitsdaten AD, die einen Abhängigkeitsgraphen 100 beschreiben, mehrere Abhängigkeitsdaten AD1, AD2, AD3 usw. verwendet, in denen jeweils die Ladevorgänge für einen kompletten Hochlauf bzw. für ein bestimmtes Anwendungsprogramm festgelegt sind. Die Abhängigkeitsdaten AD1 bis AD3 legen die Abhängigkeiten bspw. nach Art eines bekannten Makefiles fest, das für einen Compiler die Reihenfolge der Kompilierung verschiedener Softwarekomponenten festlegt. Auch andere Beschreibungen der Abhängigkeiten für die Initialisierung der Komponenten werden verwendet.

Die angegebene Lösung ist nicht auf Mobilfunktelefone beschränkt, sondern wird auch bei anderen Systemen verwendet, die eine Veränderung der Reihenfolge für das Laden bzw. Initialisieren von Systemkomponenten zulassen.

Zusammenfassend gilt:
- Im Vergleich zu einem herkömmlichen Bootvorgang, bei dem alle Initialisierungsschritte in ihrer Reihenfolge statisch festgelegt sind, erfolgt bei Verwendung der Erfindung eine dynamisch Priorisierung bestimmter Schritte, die für die Benutzbarkeit einer Funktionalität notwendig sind. Dadurch wird diese Funktionalität früher nutzbar, was sich positiv auf eine Verkürzung der Antwortzeiten des Geräts auswirkt, z.B. eines Handies oder eines Computers, insbesondere eines Personalcomputers.
- Durch die schnellere Verfügbarkeit ist es möglich, das Gerät weiter herunterzufahren als bisher. Es kann jetzt ein Reboot durchgeführt werden, wo früher eine Standby erforderlich war. Das wirkt sich positiv auf den Stromverbrauch des Gerätes aus.
- Die Reihenfolge der Initialisierungsschritte kann dynamisch festgelegt werden, da eine Beschreibung der Abhängigkeiten vorliegt.

Zusammenfassend gilt weiterhin, dass insbesondere bei Smartphones, die als Zweiprozessorsysteme ausgeführt sind, durch die Erfindung erheblich kürzere Umschaltzeiten aus einem Ruhezustand in einen Einzustand erreichbar sind. So übernimmt der Modemprozessor die GSM-Unterstützung und erkennt eingehende Anrufe. Der Applikationsprozessor wird im Ruhezustand komplett abgeschaltet, um Strom zu sparen. Um eingehende Anrufe anzunehmen, muss der Applikationsprozessor hochgefahren werden. Dabei werden die benötigten Treiber für die GSM-Schnittstellen und die Sprachapplikation mit Priorität initialisiert, so dass die Annahme des Gesprächs früher möglich ist als bei bisherigen Lösungen. Mindestens einer andere Funktionalität des Betriebssystems BS2, die zum Beispiel Voraussetzung für eine Telefonbuchapplikation sind, werden dagegen erst später initialisiert. Das bedeutet, dass diese Funktionalität damit erst später verfügbar wird.

### Bezugszeichenliste

- 10: Mobilfunktelefon
- 12: Funkschnittstelle
- 14: Mobilfunknetz
- 16: Anwendungsprozessor
- 18: Modemprozessor
- 20: Speichereinheit
- 22: Pfeil
- 24: Speichereinheit
- 26: Pfeil
- 30: Speichereinheit
- BS1,: BS2 Betriebssystem
- AP1,: AP2 Anwendungsprogramm
- AD: Abhängigkeitsdaten
- t0 bis t4: Zeitpunkt
- t4a,: t4b Zeitpunkt
- 40: Akku
- 42: Bedien-/Anzeigeeinheit
- 44: Steuerschaltung
- 50: Anreiz
- Z1 bis Z13: Betriebszustand
- 110 bis 140: Kante
- I bis III: Weg
- 150, 152: Linie

## Patentansprüche

1. Verfahren zum Ändern der Betriebszustände eines Gerätes (10) mit mindestens einem Prozessor (16, 18),
bei dem die folgenden Schritte ausgeführt werden:
Speichern von ersten Abhängigkeitsdaten (AD, I), welche mindestens eine Befehlsfolge angeben, die in einer Speichereinheit (20) zu speichern ist,
Speichern von zweiten Abhängigkeitsdaten (AD, II), welche mindestens eine Befehlsfolge angeben, die in einer Speichereinheit (20) zu speichern ist,
Betreiben eines Gerätes (10) mit mindestens einem Prozessor (16, 18) in einem Einzustand, in welchem ein Betriebssystemkern (BS2) in einer Speichereinheit (20) gespeichert ist,
Umschalten des Gerätes (10) aus dem Einzustand in einen Ruhezustand, in dem kein Betriebssystemkern (BS2) in der Speichereinheit (20) gespeichert ist,
nach dem Umschalten in den Ruhenszustand und vor dem Erreichen des dem Ruhezustand nächstfolgenden Einzustands Auswählen der ersten Abhängigkeitsdaten (AD, I) oder der zweiten Abhängigkeitsdaten (AD, II),
Umschalten aus dem Ruhezustand in einem dem Ruhezustand unmittelbar folgenden Einzustand,
beim Umschalten in den Einzustand Speichern des Betriebssystemkerns (BS2) in einer Speichereinheit (20) des Gerätes (10) und Speichern von Befehlsfolgen in einer Speichereinheit (20) des Gerätes (10) gemäß den ausgewählten Abhängigkeitsdaten (AD, I; AD, II).

2. Verfahren nach Anspruch 1, **dadurch gekennzeichnet, dass** die ersten Abhängigkeitsdaten (AD, I) eine erste Reihenfolge (I) für mindestens zwei voneinander verschiedene Befehlsfolgen angeben, die in einer Speichereinheit (20) zu speichern sind,
dass die zweiten Abhängigkeitsdaten (AD, II) eine zweite Reihenfolge (II) für mindestens zwei voneinander verschiedene Befehlsfolgen (GPRS, GUI) angeben, die in einer Speichereinheit (20) zu speichern sind,
dass eine erste Befehlsfolge (GPRS) sowohl in der ersten Reihenfolge (I) als auch in der zweiten Reihenfolge (II) angegeben ist und in der ersten Reihenfolge (I) eine Position hat, die kleiner ist als die Position einer zweiten Befehlsfolge (GUI), die ebenfalls sowohl in den ersten Reihenfolge (I) als auch in den zweiten Reihenfolge (II) angegeben ist,
und dass die erste Befehlsfolge (GPRS) in der zweiten Reihenfolge (II) eine Position hat, die größer als die Position der zweiten Befehlsfolge (GUI) in der zweiten Reihenfolge (II) ist.

3. Verfahren nach Anspruch 1 oder 2, **dadurch gekennzeichnet, dass** die ersten Abhängigkeitsdaten (AD, I) ohne Bezug zu einer Programmbefehlsfolge mindestens eine Hilfsbefehlsfolge angeben, die in einer Speichereinheit (20) zu speichern ist, und dass die zweiten Abhängigkeitsdaten (AD, II) für eine Programmbefehlsfolge (AP1) mindestens eine nicht zu der Programmbefehlsfolge gehörende Hilfsbefehlsfolge (GUI) angeben, die zur Ausführung der Programmbefehlsfolge (AP1) in einer Speichereinheit des (20) Gerätes (10) zu speichern ist.

4. Verfahren nach Anspruch 1 oder 2, **dadurch gekennzeichnet, dass** die ersten Abhängigkeitsdaten (AD, II) für eine erste Programmbefehlsfolge (AP1) mindestens eine nicht zu der ersten Programmbefehlsfolge gehörende Hilfsbefehlsfolge (GUI) angeben, die zur Ausführung der ersten Programmbefehlsfolge (AP1) in einer Speichereinheit (20) des Gerätes (10) zu speichern ist,
und dass die zweiten Abhängigkeitsdaten (AD, III) für eine zweite Programmbefehlsfolge (AP2) mindestens eine nicht zu der Programmbefehlsfolge (AP2) gehörende Hilfsbefehlsfolge (GPRS) angeben, die zur Ausführung der zweiten Programmbefehlsfolge (AP2) in einer Speichereinheit (20) des Gerätes (10) zu speichern ist.

5. Verfahren nach Anspruch 3 oder 4, **dadurch gekennzeichnet, dass** die Hilfsbefehlsfolge ein Programm ist, das als Schnittstelle zwischen dem Anwendungsprogramm (AP1, AP2) und dem Betriebssystemkern (BS2) dient,
und/oder dass die Hilfsbefehlsfolge ein Teil des Betriebssystems (BS2) ist.

6. Verfahren nach einem der Ansprüche 3 bis 5 sowie nach Anspruch 2, **dadurch gekennzeichnet, dass** bei Auswahl von Abhängigkeitsdaten (AD, II; AD, III) für eine Programmbefehlsfolge (AP1, AP2) nach dem Speichern der Programmbefehlsfolge in einer Speichereinheit (20) des Gerätes (10) gemäß den Abhängigkeitsdaten (AD, II; AD, III) mindestens eine weitere Befehlsfolge (GUI, GPRS) gespeichert wird, die nicht zur Ausführung der Programmbefehlsfolge (AP1, AP2) erforderlich ist.

7. Verfahren nach einem der Ansprüche 3 bis 6, **dadurch gekennzeichnet, dass** nach dem Speichern der Programmbefehlsfolge (AP1, AP2) in einer Speichereinheit (20) des Gerätes (10) mit der Ausführung der Programmbefehlsfolge (AP1, AP2) automatisch begonnen wird.

8. Verfahren nach einem der Ansprüche 3 bis 7, **dadurch gekennzeichnet, dass** die Programmbefehlsfolge ein Anwendungsprogramm (AP1, AP2) ist, insbesondere ein Kalenderprogramm, ein Notizprogramm, ein Adressverwaltungsprogramm, ein eMailprogramm, ein Schreibprogramm, ein Tabellenkalkulationsprogramm, ein Datenbankprogramm oder ein Browserprogramm.

9. Verfahren nach einem der vorhergehenden Ansprüche, **dadurch gekennzeichnet, dass** das Gerät (10) ein Mobilfunktelefon ist.

10. Verfahren nach Anspruch 9, **dadurch gekennzeichnet, dass** eine Programmbefehlsfolge (AP1, AP2) die Funktionen eines Telefonbuchprogramms erbringt,
oder dass eine Programmbefehlsfolge (AP1, AP2) die Funktionen eines Telefonieprogramms erbringt,
oder dass eine Programmbefehlsfolge (AP1, AP2) die Funktionen einer Internetanwendung erbringt.

11. Verfahren nach Anspruch 9 oder 10, **dadurch gekennzeichnet, dass** das Mobilfunktelefon (10) mindestens zwei Prozessoren (16, 18) enthält, vorzugsweise einen Modemprozessor (18) und einen Anwendungsprozessor (16).

12. Verfahren nach Anspruch 11, **dadurch gekennzeichnet, dass** im Ruhezustand nur einer (16) der beiden Prozessoren (16, 18) eingeschaltet ist, vorzugsweise der Modemprozessor (18), und dass der andere Prozessor (16) ausgeschaltet ist, vorzugsweise der Anwendungsprozessor (16).

13. Verfahren nach einem der Ansprüche 1 bis 8, **dadurch gekennzeichnet, dass** das Gerät eine Datenverarbeitungsanlage ist, vorzugsweise Datenverarbeitungsanlage ohne Mobilfunknetzschnittstelle.

14. Verfahren nach einem der vorhergehenden Ansprüche, **dadurch gekennzeichnet, dass** die ersten Abhängigkeitsdaten (AD, I) und die zweiten Abhängigkeitsdaten (AD, II) Teile eines Abhängigkeitsgraphen (100) sind, der Knoten (Z1 bis Z13) und Kanten zwischen den Knoten (Z1 bis Z13) enthält, vorzugsweise Teile eines gerichteten Graphen,
oder dass die Abhängigkeitsdaten (AD) Abhängigkeitsregeln enthalten, die die Reihenfolge festlegen.

15. Verfahren nach einem der vorhergehenden Ansprüche **dadurch gekennzeichnet, dass** die ersten Abhängigkeitsdaten (AD, I) oder die zweiten Abhängigkeitsdaten (AD, II) vor dem Beginn des Ladens des Betriebssystemkerns (BS2) ausgewählt werden, oder dass die ersten Abhängigkeitsdaten (AD, I) oder die zweiten Abhängigkeitsdaten (AD, II) während des Ladens des Betriebssystemkerns (BS2) ausgewählt werden.

16. Verfahren nach einem der vorhergehenden Ansprüche **dadurch gekennzeichnet, dass** die ersten Abhängigkeitsdaten (AD, I) und die zweiten Abhängigkeitsdaten (AD, II) in einer Speichereinheit (30) gespeichert werden, die im Ruhezustand, ihre Daten speichert, insbesondere in einer Festwertspeichereinheit, die auch beim Abschalten der Betriebsspannung der Speichereinheit (20) die Daten speichert,
und/oder dass der Betriebssystemkern (BS2) und die Befehlsfolgen in einer flüchtig Daten speichernden Speichereinheit (20) gespeichert werden, insbesondere in einem RAM.

17. Gerät (10),
mit mindestens einem Prozessor (16, 18),
mit mindestens einer nichtflüchtig speichernden Speichereinheit (30),
wobei in der nichtflüchtig speichernden Speichereinheit (30) erste Abhängigkeitsdaten (AD, I) gespeichert sind, welche mindestens eine Befehlsfolge angeben, die in einer Speichereinheit (20) zu speichern ist,
wobei in der nichtflüchtig speichernden Speichereinheit (30) zweite Abhängigkeitsdaten (AD, II) gespeichert sind, welche mindestens eine Befehlsfolge angeben, die in einer Speichereinheit (20) zu speichern ist,
und wobei in der nichtflüchtig speichernden Speichereinheit (30) mindestens ein Betriebssystem (BS2) gespeichert ist,
mit einer flüchtig speichernden Speichereinheit (20), die in einem Ruhezustand keine Daten speichert,
und mit einer Steuereinheit (44), die einen Wechsel aus einem Einzustand in einen Ruhezustand und aus dem Ruhezustand in den Einzustand steuert,
wobei in dem Einzustand ein Betriebssystemkern des Betriebssystems (BS2) in der flüchtig speichernden Speichereinheit (20) des Gerätes (10) gespeichert ist,
wobei nach dem Umschalten in den Ruhezustand und vor dem Erreichen des nächstfolgenden Einzustands die ersten Abhängigkeitsdaten (AD, I) oder die zweiten Abhängigkeitsdaten (AD, II) ausgewählt werden,
und wobei beim Umschalten in den Einzustand der Betriebssystemkern des Betriebssystems (BS2) in der flüchtig speichernden Speichereinheit (20) des Gerätes (10) und gemäß den ausgewählten Abhängigkeitsdaten (AD, I; AD, II) die dort angegebenen Befehlsfolgen in der flüchtig speichernden Speichereinheit (20) gespeichert werden.
